# EUROPEAN PATENT APPLICATION

(11) **EP 0 643 904 A1**
(43) Date of publication of application: **22.03.1995**
(21) Application number: 94202493.6
(22) Date of filing: 31.08.1994
(51) Int. Cl.: A01D 23/02

(54) **Device for removing and cutting foliage, such as potato foliage**

(30) Priority: 20.09.1993 NL 9301623
(71) Applicant: RUMPTSTAD INDUSTRIES B.V., NL-3243 LA Stad aan 't Haringvliet (NL)
(72) Inventor: Lerink, Peter, NL-3286 LS Klaaswaal (NL)
(74) Representative: Lips, Hendrik Jan George, Ir.

(57) **Abstract**

Device for removing and cutting foliage such as potato foliage, said device comprising a frame (1) that can be fastened to a tractor and rests on the ground by means of wheels (4). The frame (1) contains a rotor (6) having its axis of rotation (5) extending almost horizontally and square to the driving direction of the tractor during operation and said rotor (6) being driveable through the power take-off of the tractor and being provided with a number of pivotably mounted clappers (7). A more or less semicircular cover (8) is connected to the frame (1), and within the cover (8) and at some distance thereof, a mat (9) of flexible material, such as rubber, is mounted under tension. The tension of the mat (9) can be adjusted through the fact that one end (11) thereof is connected to a pivotably arranged, lockable shaft (12).

## Description

The invention relates to a device for removing and cutting foliage, such as potato foliage, said device comprising a frame that can be fastened to a tractor and rests on the ground by means of wheels, said frame containing a rotor having its axis of rotation extending almost horizontally and square to the driving direction of the tractor during operation and said rotor being driveable through the power take-off of the tractor and being provided with a number of pivotably mounted clappers, a more or less semicircular cover being connected to the frame.

Such a device is used e.g. in order to facilitate harvesting potatoes, through the fact that first the foliage is removed therefrom.

Here, the cover serves to direct the cut foliage to the rotor back side, where it is discharged by special provisions in the grooves between the beds. The cover also serves for receiving objects flung away by the rotor, such as stones, so that they do not present any danger to the surroundings.

The air vortex generated by the rotor rotating at high speed results in the fact that especially under dry circumstances, soil particles are carried along with the foliage. Since the cover is mostly wet due to the juice being beaten from the foliage, a considerable amount of the soil particles and shreds of cut foliage carried along will adhere to the inner circumference of the cover.

This process continues until the layer of soil and foliage particles is so thick, that the clappers contact the layer. This results in wear of the clappers and additional energy consumption. Moreover, the weight of the layer of soil and foliage particles is regarded as an inconvenience.

The object of the invention is to remove this difficulty and to that end provides for that a mat of flexible material is mounted under tension within the cover, in such a way that the mat is at some distance from the cover, but can not contact the rotor clappers.

Such a mat can be made of rubber, for example, and preferably means will be provided by which the tension of the mat can be adjusted.

These means can be formed through the fact that the end of the mat being parallel to the rotor axis is fixedly connected to the cover or to the frame carrying the cover, whereas the other end is connected to a shaft being rotatably supported by the cover or the frame and being provided with locking members by which the shaft can be locked in its position.

In this way, mounting of the mat is facilitated, and it can be brought under the proper tension. The space between the mat and the rotor clappers provides for that the velocity at which the stones are flung against, has already slightly decreased before the stones hit the mat. The cover no longer serves to direct the cut foliage, yet does serve as protection against objects possibly shooting through the mat, such as a boken off clapper, for example.

The discharging function of the mat is based on the fact that by shocking of the machine, the mat starts vibrating, thereby eliminating the correlation in the adhered layer. Then, the layer no langer has the nature of a consistent crust.

Between both of its ends, the mat can be further supported by one or more supporting bars being parallel to the end edges of the mat and pushing the mat outwardly in relation to the rotor. Thereby, the mat can span a greater distance without contacting the rotor.

The invention is further explained by way of an embodiment illustrated in the drawing, in which:
Fig. 1 shows diagrammatically a side view of a device according to the invention, from which certain parts were omitted for the sake of clarity; and
Fig. 2 shows diagrammatically a side view of a rotor as applied with the device according to Fig. 1.

The device illustrated in the drawing comprises a frame 1 consisting of a number of parts not further indicated, in which the front end 2 of the frame can be coupled to a tractor, whereas the rear end 3 is supported by wheels 4. Between the ends 2 and 3 there is the axle 5 carrying the rotor 6 having the pivotably mounted clappers 7. The clappers 7 are offset in relation to each other and have such a length that they follow the contours of the beds on which the potatoes grow.

The cover 8 is situated around part of the circumference of the rotor 6 and the mat 9 is mounted within the cover. The end 10 of the mat 9 is fixedly connected to the cover 8 and the other end 11 is connected to the shaft 12 being rotatably supported by the cover. For example, the shaft 12 can be provided with a ratchet wheel - not illustrated in the drawing - cooperating with a ratchet mounted on the cover, so that the shaft 12 can be locked in a certain position when the mat 9 is brought under the desired tension.

Between the ends 10 and 11 of the mat 9, additionally a supporting post 13 is mounted in the cover, for positively keeping the mat at a distance from the clappers 7 of the rotor 6.

Provisions known per se have been mounted for driving the rotor 6 from the power take-off of the tractor, so that these need not be further described.

It will be obvious, that only one possible embodiment of a device according to the invention is illustrated in the drawing and described above and that many changes can be made without being beyond the inventive idea.

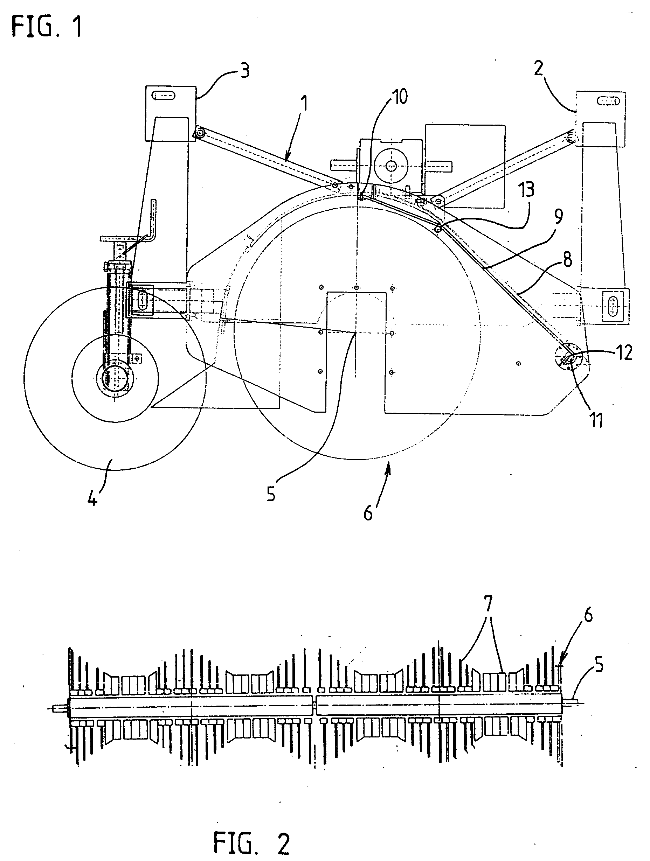

Thus, it would be possible to support the mat by bent rods being at the longitudinal edges of the mat, as seen in Fig. 1. One rod can be fixedly connected to the cover and the other one can be pulled towards the side wall of the cover. Then, the mat can be tensioned in a direction parallel to the rotor shaft.

## Claims

1. Device for removing and cutting foliage, such as potato foliage, said device comprising a frame (1) that can be fastened to a tractor and rests on the ground by means of wheels (4), said frame containing a rotor (6) having its axis of rotation (5) extending almost horizontally and square to the driving direction of the tractor during operation and said rotor being driveable through the power take-off of the tractor and being provided with a number of pivotably mounted clappers (7), a more or less semicircular cover (8) being connected to the frame (1), characterized in that a mat (9) of flexible material is mounted under tension within the cover (8), in such a way that the mat (9) is at some distance from the cover (8), but can not contact the clappers (7) of the rotor (6).

2. Device according to claim 1, characterized in that means (12) have been provided, by which the tension of the mat (9) can be adjusted.

3. Device according to claim 2, characterized in that the means are formed by the fact that one end (10) of the mat (9) being parallel to the axis of the rotor (6) is fixedly connected to the cover (8) or to the frame (1) carrying the cover, whereas the other end (11) is connected to a shaft (12) being rotatably supported by the cover (8) or the frame (1) and is provided with locking members by which the shaft (12) can be locked in its position.

4. Device according to one of the preceding claims, characterized in that between both of its ends, the mat (9) is supported by one or more supporting bars (13) being parallel to the end edges (10, 11) of the mat (9) and pushing the mat outwardly in relation to the rotor (6).
